# EUROPEAN PATENT SPECIFICATION

(11) **EP 2 027 388 B1**
(45) Date of publication and mention of the grant of the patent: **25.03.2015**
(21) Application number: 07751573.2
(22) Date of filing: 23.02.2007
(51) Int. Cl.: F03B 3/12, F03B 11/04, F03B 11/00

(54) **LIQUID CONTROL JET DURING PART LOAD OPERATION IN A HYDRAULIC TURBINE**
FLÜSSIGKEITSSTEUERSTRAHL BEI TEILLASTBETRIEB IN EINER HYDRAULISCHEN TURBINE
JET DE COMMANDE DE LIQUIDE PENDANT UN FONCTIONNEMENT EN CHARGE PARTIELLE DANS UNE TURBINE HYDRAULIQUE

(30) Priority: 09.06.2006 CA 2549749
(43) Date of publication of application: 25.02.2009
(73) Proprietor: Andritz Technology and Asset Management GmbH, 8045 Graz (AT)
(72) Inventor: CIOCAN, Gabriel, Dan, F-74500 Evian Les Bains (FR); VU, Thi, Cong, Lachine, Quebec, H8T 2Z2 (CA); NENNEMANN, Bernd, Pointe-claire, Quebec, H9S 4Y5 (CA); DEMERS, Eric, Roxboro, Quebec, H8Y 3S6 (CA); SUSANRESIGA, Romeo, Florin, R-RO-300650 Timisoara (RO)
(74) Representative: Hoffmann Eitle
(86) International application number: PCT/US2007/004821
(87) International publication number: WO 2007/142709

(56) References cited:
- DE-U- 7 327 606
- GB-A- 850 112
- JP-A- 57 008 365
- US-A- 1 942 995
- US-A- 1 962 380
- US-A- 2 182 974
- US-A- 2 507 796
- US-A- 4 515 524
- US-A1- 2005 165 510

## Description

### FIELD OF THE INVENTION

The present invention relates to a hydraulic turbine having one or more control jets of liquid injected with high velocity axially downstream of the turbine runner and into an upper portion of the turbine draft tube, during part load operation of the turbine, to control the swirling flow and mitigate both helical vortex breakdown and its associated pressure fluctuations.

### BACKGROUND OF THE INVENTION

Until recently, hydraulic turbines have been operated close to peak efficiency. In the neighborhood of this optimum operating point, dynamic forces on the turbine components are generally low, with the exception of transient conditions such as load rejection and surge.

The variable demand on the energy market, as well as the limited energy storage capabilities, requires a great flexibility in operating hydraulic turbines. As a result, hydraulic turbines tend to be operated over an extended range far from the best efficiency point. In particular, Francis turbines, which have a fixed-pitch runner, have a high level of residual swirl at the draft tube inlet as a result of the mismatch between the swirl generated by the wicket gates (guide vanes) and the angular momentum extracted by the turbine runner when operating at part load conditions. In the turbine draft tube the flow exiting the runner is decelerated, thereby converting the excess of the kinetic energy into static pressure. The decelerated swirling flow often results in breakdown of the normal vortex associated with flow of liquid in the draft tube which gives rise to the development of a central quasi-stagnation region in the draft tube. The vortex breakdown is now recognized as a primary cause of severe pressure fluctuations or pressure pulsations experienced in the draft tube of a hydraulic turbine operating at part load. The pressure pulsations are believed to be caused by the transformation of an axis-symmetrically swirling vortex flow into one or more precessing helical vortices as the operating condition shifts towards part load. The precessing motion of the helical vortex results in a fluctuating pressure on any stationary point of the draft tube. In addition, a limited quantity of air or water vapor in the liquid flow provides a degree of elasticity, termed cavitation compliance, and this elasticity can lead to a form of resonance in the draft tube excited by the precessing inhomogeneous pressure field associated with the core of the spiral vortex flow.

Many different solutions have been proposed with respect to the problem of draft tube instability including altering blade design, the introduction of vanes in the draft tube, and the injection of air into a recirculation region surrounded by the vortex rope. The air injection produces an essentially axis-symmetrical stable flow, or a hollow air core surrounded by the swirling water flow. The air injection changes the breakdown of the vortex form from a spiral to a bubble. The injection of relatively small amounts of air have small effects on the efficiency of the turbine operation while considerably reducing the part load pressure swings. However, the vortex rope and the excitation of the rope continues to exist.

US 1,950,777 discloses a hydraulic turbine according to the preamble of claim 1.

US 2,507,796 discloses a related hydraulic turbine.

JP-A-57 008365 shows a device having nozzles in the wall of the draft tube which inject liquid streams into the draft tube in a radially inward direction.

DE-U-7327606 describes several different solutions which all aim at controlling the flow of liquid and in particular to reduce or even prevent the occurrence of vortex ropes during part load turbine operation.

US-A1-2005/165,510 describes a pressure fluctuations reducing means including a surge suppression chamber surrounding the draft tube.

Accordingly, there is a need to develop hydraulic turbines for present day hydroelectric facilities that operate efficiently not only under normal load conditions but also at low or partial load conditions, without being subjected to the severe pressure fluctuations originating in the draft tube as a result of helical vortex breakdown in the decelerated swirling flow downstream of the runner.

### SUMMARY OF THE INVENTION

The present invention relates to controlling swirling flow downstream of a hydraulic turbine runner by the axial injection of high velocity jet or jets of liquid at the runner outlet or draft tube inlet. The control jet or jets of liquid act on the flow of liquid in the draft tube by mitigating breakdown of the vortex flow path of this liquid and thereby diminishing or eliminating draft tube pressure pulsations experienced during part load operation of the turbine.

By "high velocity " it is meant that the axially directed jet of liquid has a velocity that is greater than the mean axial velocity of liquid flowing at the runner outlet so as to provide the benefit of the present invention. This high velocity of the liquid control jet or jets may be as much as about 2 to 4 times or more greater than the mean axial velocity of the liquid flowing at the runner outlet. It should be understood that the high velocity of the liquid control jet or jets will vary depending on the location of injection of the liquid control jet or jets and the number of control jets utilized. It should be further understood that by making reference to a control jet or jets of high velocity liquid being injected axially of the turbine it is meant the control jet or jets, may be directed along the turbine axis, parallel to the turbine axis, or converging on a focal point adjacent the upper portion of the draft tube lying on the turbine axis or a parallel axis adjacent to the turbine axis. Further the jet or jets may be located offset from the turbine axis by, for example but not limited thereto, 10 percent of the diameter of the turbine runner and still be considered to be located relative to a central axis of the turbine runner.

The control jet or jets are preferably operated when the turbine is operating at part load conditions. The control jet or jets are injected from at least one nozzle head device positioned relative to a central axis for the turbine runner and adjacent to an upper portion of the draft tube whereby the jet or jets of liquid are injected downstream of the runner. The at least one nozzle head device has at least one nozzle from which a corresponding high velocity liquid control jet is emitted into the draft tube. In one embodiment, the turbine has a rotatable runner mounted above the draft tube and the runner has a crown portion that houses the at least one nozzle head device. In an alternative embodiment, the at least one nozzle head device may be supported in an upper portion of the draft tube below and spaced from the crown of the turbine runner.

The at least one nozzle head device may comprise a single nozzle or a plurality of nozzles arranged in one or more circular arrays, or a single annular nozzle.

In accordance with the present invention there is provided a hydraulic turbine comprising the features of claim 1.

In accordance with the present invention there is provided a method of controlling part load operation of a hydraulic turbine during part load conditions having a runner, a draft tube located downstream of the runner and a liquid passageway extending through the runner and the draft tube. The method comprises the step of injecting one or more control jets of high velocity liquid axially of the turbine, downstream of the turbine runner and into at least an upper portion of the draft tube, as recited in claim 7.

It is envisaged that the method may further include the step of locating the one or more control jets centrally of the runner prior to the step of injecting. Further, the jet or jets may be located offset from the turbine axis.

Further during the step of injecting the one or more control jets, the one or more control jets may be injected in one direction selected from the group consisting of along an axis of the turbine, parallel to the turbine axis, converging on a focal point adjacent the upper portion of the draft tube lying on the turbine axis and a parallel axis adjacent to the turbine axis.

### BRIEF DESCRIPTION OF THE DRAWINGS

For a better understanding of the nature and objects of the present invention reference may be had to the accompanying diagrammatic drawings in which:
FIG. 1A is an elevation view, partially in cross-section, of a Francis turbine showing a nozzle head device for emitting a control jet positioned in the crown above the draft tube;
FIG. 1B illustrates an alternative embodiment for the nozzle head device for emitting a control jet where the nozzle head device is in the runner crown exclusively;
FIG. 2 illustrates an alternative embodiment for the nozzle head device for emitting a control jet where the nozzle head device is positioned in the draft tube spaced below the crown;
FIGs. 3A and 3B show comparative velocity contours for water flowing through the draft tube;
FIGs. 4A and 4B show comparative pressure contours for water flowing through the draft tube;
FIGs. 5A through 5D show alternative embodiments for the arrangement of nozzles in the nozzle head device.

### DETAILED DESCRIPTION OF THE INVENTION

The present invention relates to a hydraulic turbine having one or more liquid control jets axially directed downstream of a turbine runner and into an upper portion of a draft tube. The present invention is intended for use in fixed-pitch hydraulic turbines and preferably finds application in propeller and Francis type turbines.

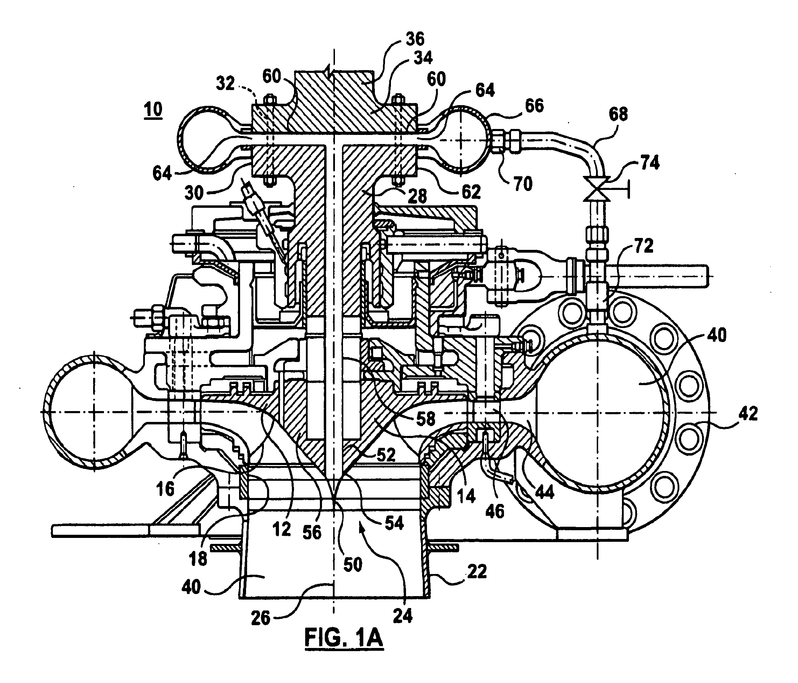

Referring to FIG. 1A there is shown an exemplary hydraulic turbine installation 10 suitable for use in the generation of hydro-electricity. The turbine installation 10 comprises a Francis turbine 12 having a crown 14, runner blades 16, and a band 18. The Francis turbine runner 12 is adapted to rotate within a stationary casing 42. Below the Francis turbine runner 12 is located a draft tube 22. It should be understood that while a Francis turbine runner is shown the runner could also be a propeller type runner. Only a portion of the draft tube 22 is shown. The upper portion 24 of the draft tube 22 is shown to have a vertically extending central axis 26. The axis 26 is also the central axis for the runner 12 and the axis of the hydraulic turbine 10.

The upper portion of the crown 14 is connected to shaft 28. The shaft 28 has a coupling flange 30 which is connected by bolts 32 to a coupling flange 34 of a generator shaft 36. Rotation of the Francis runner 12 causes the shaft 28 to rotate and hence, the generator shaft 36 to rotate. The generator shaft 36 is connected to a generator (not shown) which generates electricity in response to the rotating action of the Francis turbine 12.

The Francis turbine 12 rotates as a result of water moving along water passageway 40, from the spiral casing 42 past stay vanes 44, past wicked gate 46, the runner blades 16 and into the draft tube 22.

In accordance with the embodiment shown in FIG. 1A, a control jet 50 is injected into the water flowing in the top portion 24 of the draft tube 22. A nozzle head device 52 comprise an end portion of conduit 58 that passes through the centre of the crown 14. The head device 52 has a nozzle 54 from which the control jet 50 is injected into the water or liquid flowing through the draft tube 22. The crown 14 has a crown tip portion 56 that houses the nozzle head device 52.

Water under pressure is supplied to the crown tip portion 56 and the nozzle head device 52 by the conduit 58 passing through shaft 28. The conduit 58 is connected to radially inwardly extending conduits 60. The shaft 28 has an outside wall 62 with one or more liquid ports 64 contained therein. The radially inwardly directed conduits 60 are connected with the nozzle 54, via conduit 58 and nozzle head device 52 and transport high pressure water from the liquid ports 64 to the nozzle 54. In the illustrated embodiment the inlet ports 64 are located between the coupling flanges 30 and 34 which is also referred to herein as being located on the outside wall of the shaft 28 as the coupling 30 forms part of the shaft 28. While the shafts 28 and 36 are illustrated as being solid, in practice, they are typically hollow.

A stationary liquid collection chamber 66 is mounted in surrounding sealing relation with the hollow shaft 28, or in the illustrated embodiment the coupling flanges 30, 34. Stationary liquid collection chamber 66 directs pressurized water into the ports 64. The stationary liquid or water collection chamber 66 is connected to a liquid or water bypass supply conduit 68 at an end portion 70 thereof. The liquid bypass supply conduit 68 has an opposite end portion 72 coupled in sealing relation with the spiral casing 42 and communicates liquid from the spiral casing 42 to the liquid collection chamber 66. A regulating valve 74 is located in the pressurized liquid supply conduit 68. The valve 74 controls the flow rate of the liquid supplied to the liquid chamber and is adapted to switch the control jet from an off condition to an on condition and to vary the flow rate of the control jet depending on the part load operating conditions of the turbine installation 10. In the embodiment shown, the regulating valve 74 is located upstream of the nozzle 54 so as to control the flow rate of the water and hence the resultant velocity of the "high velocity" control jet 50 emitted from nozzle 54. It should be understood that the regulating valve 74 is able to switch the supply of water to liquid collection chamber 66 off when the turbine is operating at optimal load conditions. As a result no water is emitted from nozzle 54. In the embodiment of FIG. 1A, the control jet 50 is emitted from the nozzle 54 of nozzle head device 52 which is positioned centrally of, and adjacent to, upper portion 24 of draft tube 22 within the crown 14. Producing the water jet at the crown tip takes advantage of the hollow turbine shaft, and benefits from a high-pressure water supply from upstream in the turbine spiral casing.

It should be understood that FIG. 1A illustrates an exemplary jet generation and control system comprising head device 52, conduits 58,60, water collection chamber 66, conduit 68, and valve 74 and that alternative embodiments for supplying water under pressure to the head device 52 will be readily understood to a person skilled in the art.

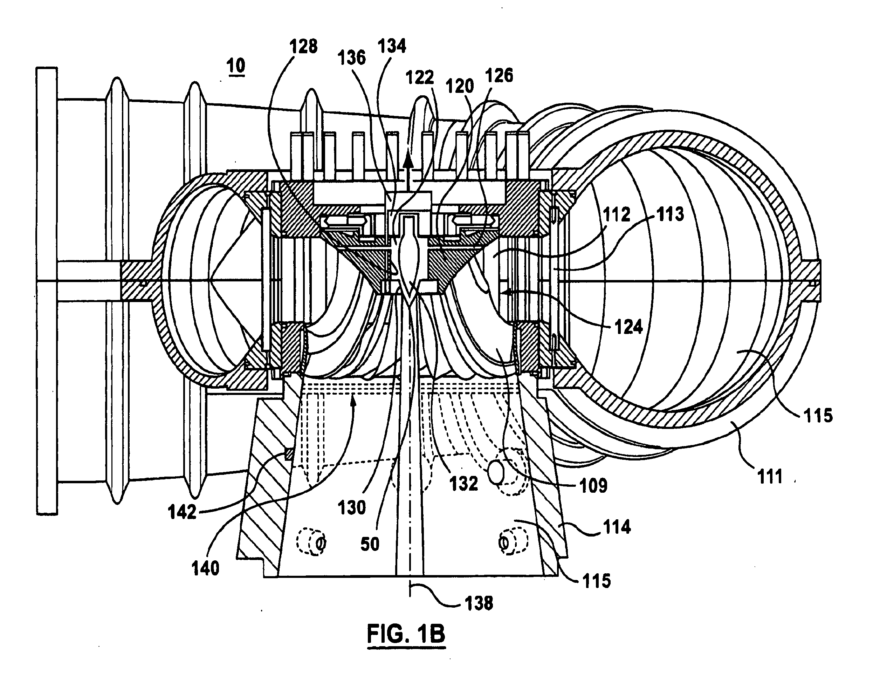

In FIG. 1B there is shown a cross-section through a turbine 10 comprising a spiral casing 111, stay vanes 113, guide vanes 112, Francis runner 109, and draft tube 114. A passageway 115 extends through the turbine 110. The runner crown 120 comprises a central cavity 122 connected with the high pressure side 124 of the runner 109 by open tubes 126. A nozzle head device 128 has a needle 132 and a nozzle 130 from which the high velocity liquid control jet 50 is emitted into the upper portion 140 of the draft tube 114 from the runner crown 120. An adjustment mechanism 134 is driven by an active control device 136 for adjusting the position of the nozzle head device 128 so as to control the speed of the high velocity liquid control jet 50.

One or more pressure sensors 142 are mounted in the draft tube 114 adjacent a sidewall thereof near the upper portion 140 of the draft tube 114. The pressure sensors 142 measure the water pressure in the upper portion of the draft tube 114 and relay these measurements to the active control device 136 which in turn controls movement of the nozzle head device 128 in order to adjust the velocity of the high velocity liquid control jet 50. When in an open position for the nozzle head device 128, water from the high pressure side 124 of the runner 109 is supplied through tubes 126 the cavity or water chamber 122 to the nozzle 130. As a result a liquid control jet 50 will be emitted from the crown 120 of the runner into upper portion 140 of the draft tube 114 also known as the draft tube inlet. The velocity or flow rate of the liquid control jet 50 is controlled by the position of the nozzle head device 128 depending on the pressure measured by the pressure sensors 142. The nozzle head device 128 is closed when the turbine is not operating at partial load operating conditions. This system of jet generation has the advantages that the jet generation system concerns a single component of the turbine, namely the runner. The system of generation does not imply any water tightness problems, and can be implemented in situ for existing runners and all the system components, except for the runner cavities and tubes and can be considered to be a turnkey jet generation type of kit.

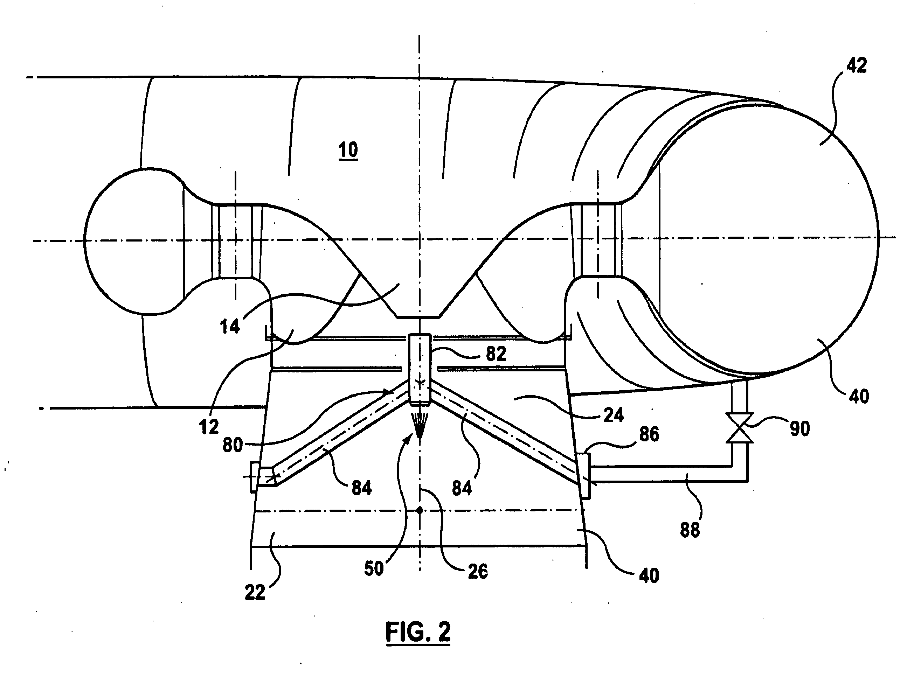

Referring to FIG. 2 there is shown an alternative embodiment which is not part of the present invention, wherein the nozzle head device 80 is spaced from the crown 14 of the turbine 10. The nozzle head device 80 comprises a nozzle 82 from which the liquid jet 50 is injected vertically axially along the axis 26 of the draft tube 22 adjacent the upper portion 24 of the draft tube 22. The nozzle head device 80 further comprises a plurality of supporting and liquid supplying conduits 84 interconnecting the head 82 with manifold 86 located on the outside wall of the draft tube 22. The manifold 86 is connected via bypass supply piping 88 to the scroll 40. A regulating valve 90 is located to control the pressure of the liquid or water supplied to nozzle 82 and hence the "high velocity" of the liquid control jet 50. In this embodiment, water under pressure is supplied from the scroll 40 through the wall of the draft tube 22 and not through the crown 14 of the Francis turbine 12.

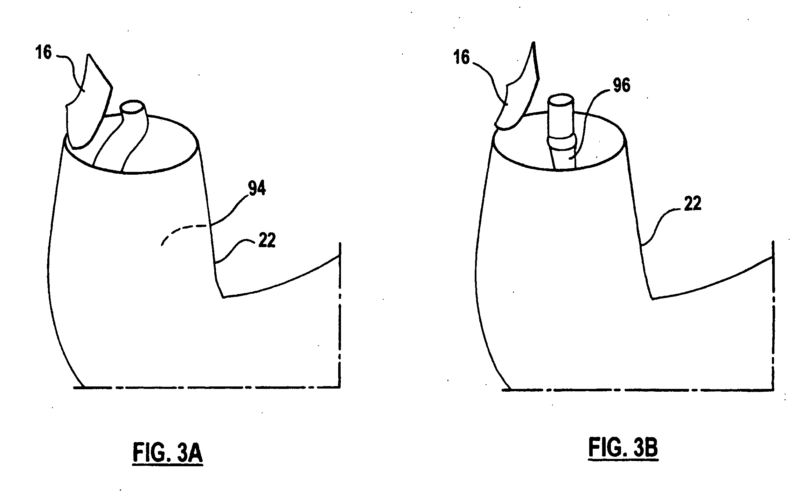

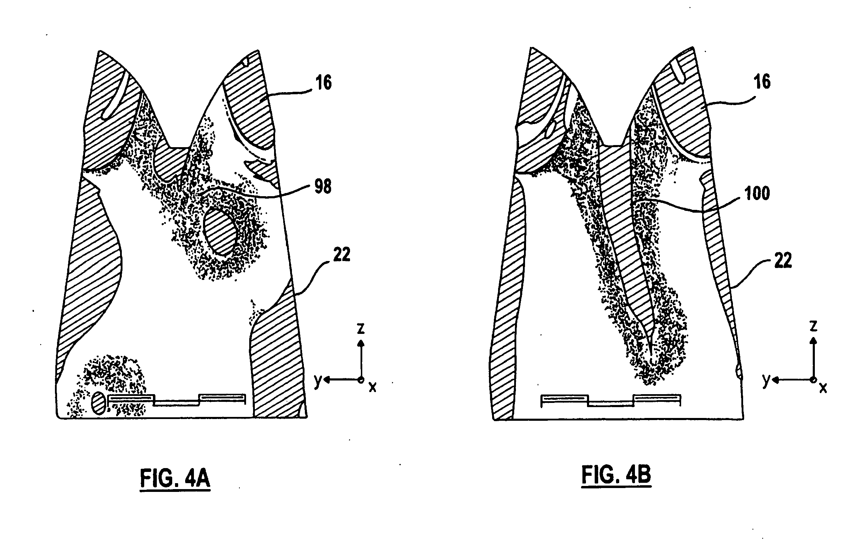

Referring to FIGS. 3A, 3B, 4A and 4B there are shown computer simulations of velocity and pressure contours of water flowing in the draft tube 22 that occur at part load conditions. FIGS. 3A and 3B show velocity contours of water flowing within the draft tube at part load conditions. In FIG. 3A, no control jet has been injected into the draft tube. In FIG. 3B, a liquid control jet has been injected into the draft tube. In FIG. 3A, where no jet is employed, there is shown a single helical draft tube vortex rope 94. In FIG. 3B where the control jet is in operation, the central low pressure region indicated by the iso-surface has been greatly reduced and its shape has changed from a helical shape to a slightly off-centre extended cone 96. In FIG. 4A, the jet is not employed and the pressure contour shows strong circumferential variations in the vortex flow of the water in the draft tube at 98, which associated with the precession motion result in severe pressure fluctuations. In FIG. 4B, where the control jet is employed there appears to be no breakdown in the low pressure area associated with the vortex at area 100.

By injecting a control jet of high velocity liquid axially into the draft tube, the precession frequency is altered in the draft tube and, eventually, by eliminating the quasi-stagnant central region, the control jet prevents or reduces development of vortex ropes in the draft tube liquid flow. As a result, the control jet addresses directly the vortex rope occurrence development thus mitigating the main source of pressure fluctuations, or at least it alters the precession frequency and reduces significantly the pressure fluctuations amplitude. Injecting a control jet of liquid is different from the air admission at the tip of the crown since the control jet of liquid is aimed at controlling or eliminating the vortex breakdown. Further when the control jet is not needed during turbine operation, the control jet can be switched off.

By avoiding the helical vortex breakdown the overall performance of the draft tube at part load is significantly improved by reducing the hydraulic losses due to severe flow non-uniformities and unsteadiness.

The control jet provides an active control of the swirling flow downstream of the runner. The control jet uses a fraction of the overall turbine discharge. The jet discharge bypasses the turbine bladed region and produces no power at the turbine shaft. However, the reduction in efficiency as a result of the jet discharge bypassing the turbine bladed region is lower than expected. This is because of reduction of hydraulic losses due to the precessing vortex rope compensating for hydraulic energy spent on the jet. In addition, the control jet has the benefit of diminishing the severe pressure pulsations and the draft tube instability at partial discharge.

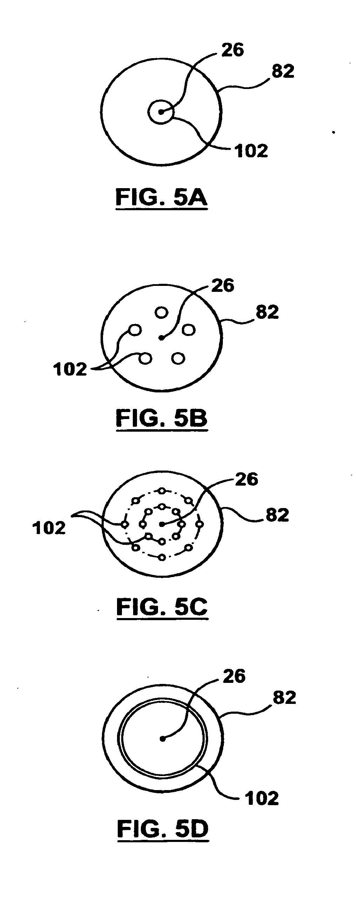

Referring to FIGs. 5A through 5D there is shown embodiments of the header portion 82 for a single nozzle head device 80 from Fig 2.. It should be understood that multiple nozzle head devices could be employed or multiple head portions 82 for each nozzle head device could be employed for alternative embodiments. However, in FIG. 5A, a single nozzle 102 for emitting the control jet 50 is located to direct the jet 50 along axis 26 of the draft tube. Alternatively, this jet 50 could be directed along an axis parallel to and offset from the axis 26. In FIG. 5B, the plurality of nozzles 102 are arranged in a circular array about the central axis 26. This will result in a plurality of jets being emitted from the nozzles 102. Alternatively the jets could be arranged in a circular array an axis parallel to and offset from the axis 26. The nozzles 102 can be arranged to emit the jets either parallel to the axis 26 or the jets may converge towards each other with a focal point lying on the axis 26, or the jets may be directed to focus on an axis parallel to the central axis 26. In FIG. 5C, two circular arrays of nozzles 102 are arranged concentrically about the central axis 26. In FIG. 5D, a single nozzle in the form of annular ring 102 is arranged around the axis 26. In alternative embodiments to FIGS. 5A to 5D, the location of the nozzles can be chosen to direct the control jet or jets to be offset from the control axis 26 by as much as 10% of the diameter of the draft tube 22.

The utilization of the control liquid jet or jets of the present invention: a) successfully addresses directly the main cause of the flow instability, rather than the effects; b) does not require geometrical modifications of the runner outer shape; c) is continuously adjustable according to the operating conditions, and can be switched-off when it is not needed; and, d) although a fraction of the discharge may bypass the bladed region, the overall turbine efficiency suffers marginally, and may be improved, due to improvement in both runner and draft tube efficiencies when the control jet is on at part load operating conditions.

While the invention has been described in connection with what is presently considered to be the most practical embodiments of the hydrodynamic approach of controlling the swirling flow and mitigating the helical vortex breakdown together with the associated severe pressure fluctuations by using axial high velocity liquid control jet or jets, it is to be understood that the invention is not to be limited thereto, but on the contrary, is intended to cover various modifications and equivalent arrangements as would be understood by a person skilled in the art of hydraulic turbines.

## Claims

1. A hydraulic turbine (10, 110) comprising:
a passageway (40, 115) permitting liquid to pass through the turbine (10, 110);
a draft tube (22, 114) defining a portion of the passageway (40, 115) through which liquid normally flows in a vortex flow path during optimal turbine operating conditions;
a rotatable runner mounted upstream of the draft tube (22, 114) and rotating about a central axis (26) passing through the runner (12, 109) and extending into the draft tube (22, 114); and
at least one nozzle head device (52, 128) positioned relative to the central axis (26) of the runner (12, 109) and adjacent to an upper portion (24, 140) of the draft tube (22, 114),wherein the at least one nozzle head device (52, 128) has at least one nozzle (54, 130) for injecting a corresponding control jet (50) of high velocity liquid axially downstream of the runner (12, 109) and into liquid flowing into the upper portion (24, 140) of the draft tube (22, 114) during part load turbine operation, so as to mitigate breakdown of the vortex flow path,
wherein the runner (12, 109) has a crown portion (14, 120), and the crown portion (12, 140) houses the at least one nozzle head device (52, 128),
**characterized in that**
the runner (12, 109) comprises a jet generation and control system located in one of the crown portion (14, 120) and a shaft portion (28) for the runner (12, 109).

2. The hydraulic turbine (10, 110) of claim 1 wherein the at least one nozzle (54, 130) locates the corresponding control jet (50) of high velocity liquid in one position of along a central axis (26) of the turbine (10, 110) and offset from the turbine central axis (26).

3. The hydraulic turbine (10, 110) of claim 1 wherein the at least one control jet (50) of high velocity liquid is ejected from the nozzle (54, 130) axially into a central portion of the vortex flow path of the liquid flowing in the draft tube (22, 114).

4. The hydraulic turbine (10, 110) of claim 1 wherein the at least one nozzle head device (52, 128) further comprises at least one valve located upstream of the at least one nozzle (54, 130) for controlling the pressure of the liquid of the corresponding control jet (50).

5. The hydraulic turbine (10, 110) of claim 1 wherein the at least one valve is able to switch the corresponding control jet (50) between on and off states.

6. The hydraulic turbine (10, 110) of claim 1 wherein further comprising one or more pressure sensors (142) in the draft tube (22, 114) for measuring the liquid pressure in the upper portion (24, 140) of the draft tube (22, 114) and relaying these measurements to an active control device which in turn controls movement of the nozzle head device (52, 128) in order to adjust the velocity of control jet (50) of high velocity liquid.

7. A method of controlling part load operation of a hydraulic turbine (10, 110) during part load conditions having a runner (12, 109), a draft tube (22, 114) located downstream of the runner (12, 109) and a liquid passageway (40, 115) extending through the runner (12, 109) and the draft tube (22, 114), the method comprising the step of injecting one or more control jets (50) of high velocity liquid from a crown portion (12, 140) of the runner (12, 109) axially of the turbine (10, 110), downstream of the turbine runner (12, 109) and into liquid flowing into an upper portion (24, 140) of the draft tube (22, 114) during part load turbine operation, so as to mitigate breakdown of the vortex flow path.

8. The method of claim 7 comprising the step of locating the one or more control jets (50) centrally of the runner (12, 109) prior to the step of injecting.

9. The method of claim 7 wherein during the step of injecting the one or more control jets (50) of high velocity liquid, the one or more control jets (50) are injected in one direction selected from the group consisting of along an axis (26) of the turbine (10, 110), parallel to the turbine axis (26), converging on a focal point adjacent the upper portion (24, 140) of the draft tube (22, 114) lying on the turbine axis (26), and converging on a focal point adjacent the upper portion (24, 140) of the draft tube (22, 114) lying on a parallel axis adjacent to the turbine axis (26).

10. The method of claim 7 wherein the step of locating comprises locating the control jet or jets (50) of high velocity liquid offset from a turbine axis (26).

## Patentansprüche

1. Hydraulische Turbine (10, 110) mit:
einem Durchgang (40, 115), der erlaubt, dass Flüssigkeit durch die Turbine (10, 110) gelangt;
einem Saugrohr (22, 114), das einen Abschnitt des Durchgangs (40, 115) definiert, durch den Flüssigkeit während optimalen Turbinenbetriebsbedingungen normalerweise in einem Wirbelströmungspfad strömt;
einem drehbaren Läufer, der stromaufwärts des Saugrohrs (22, 114) angeordnet ist und sich um eine Mittelachse (26) dreht, die durch den Läufer (12, 109) läuft, und sich in das Saugrohr (122, 114) erstreckt, und
mindestens einer Düsenkopfeinrichtung (52, 128), die relativ zu der Mittelachse (26) des Läufers (12, 109) und benachbart zu einem oberen Abschnitt (24, 140) des Saugrohrs (22, 114) positioniert ist, wobei die mindestens eine Düsenkopfeinrichtung (52, 128) mindestens eine Düse (54, 130) aufweist, zum Einspritzen eines entsprechenden Steuerstrahls (50) einer Hochgeschwindigkeitsflüssigkeit, axial stromabwärts des Läufers (12, 109) und in Flüssigkeit, die in den oberen Abschnitt (24, 140) des Saugrohrs (22, 114) strömt, während einem Teillastturbinenbetrieb, um so einen Zusammenbruch des Wirbelströmungspfads abzuschwächen,
wobei der Läufer (12, 109) einen Kronenabschnitt (14, 120) aufweist, und der Kronenabschnitt (12, 140) die mindestens eine Düsenkopfeinrichtung (52, 128) aufnimmt,
**dadurch gekennzeichnet, dass**
der Läufer (12, 109) ein Strahlerzeugungs- und Steuersystem aufweist, das in dem Kronenabschnitt (14, 120) oder einem Schaftabschnitt (128) für den Läufer (12, 109) angeordnet ist.

2. Hydraulische Turbine (10, 110) nach Anspruch 1, bei welcher die mindestens eine Düse (54, 130) den entsprechenden Steuerstrahl (50) von Hochgeschwindigkeitsflüssigkeit in einer Position entlang einer Mittelachse (26) der Turbine (10, 110) und gegenüber der Turbinenmittelachse (26) versetzt festlegt.

3. Hydraulische Turbine (10, 110) nach Anspruch 1, bei welcher der mindestens eine Steuerstrahl (50) von Hochgeschwindigkeitsflüssigkeit von der Düse (54, 130) axial in einen Mittelabschnitt des Wirbelströmungspfads der in das Saugrohr (23, 140) strömenden Flüssigkeit ausgestoßen wird.

4. Hydraulische Turbine (10, 110) nach Anspruch 1, bei welcher die mindestens eine Düsenkopfeinrichtung (52, 128) ferner mindestens ein Ventil aufweist, das stromaufwärts von der mindestens einen Düse (54, 130) angeordnet ist, zum Steuern des Drucks der Flüssigkeit des entsprechenden Steuerstrahls (50)

5. Hydraulische Turbine (10, 110) nach Anspruch 1, bei welcher das mindestens eine Ventil dazu eingerichtet ist, den entsprechenden Steuerstrahl (50) zwischen Ein- und Auszuständen umzuschalten.

6. Hydraulische Turbine (10, 110) nach Anspruch 1, die ferner einen oder mehrere Drucksensoren (142) in dem Saugrohr (22, 114) aufweist, zum Messen des Flüssigkeitsdruck in dem oberen Abschnitt (24, 140) des Saugrohr (22, 114) und zum Weiterleiten dieser Messung an eine aktive Steuereinrichtung, die ihrerseits eine Bewegung der Düsenkopfeinrichtung (52, 128) steuert, um die Geschwindigkeit eines Steuerstrahls (50) von Hochgeschwindigkeitsflüssigkeit einzustellen.

7. Verfahren zum Steuern eines Teillastbetriebs einer hydraulischen Turbine (10, 110) während Teillastbedingungen, mit einem Läufer (12, 109), einem Saugrohr (22, 114), das stromabwärts des Läufers (12, 109) angeordnet ist, und einem Flüssigkeitsdurchgang (40, 115), der sich durch den Läufer (12, 109) und das Saugrohr (22, 114) erstreckt, wobei das Verfahren den Schritt umfasst, bei dem einer oder mehrere Steuerstrahlen (50) von Hochgeschwindigkeitsflüssigkeit von einem Kronenabschnitt (12, 140) des Läufers (12, 109) axial von der Turbine (10, 110) eingespritzt werden, stromabwärts des Turbinenläufers (12, 109) und in Flüssigkeit, die in einen oberen Abschnitt (24, 140) des Saugrohrs (22, 114) strömt, während einem Teillastturbinenbetrieb, um so einen Zusammenbruch eines Wirbelströmungspfads abzuschwächen.

8. Verfahren nach Anspruch 7, das den Schritt umfasst, bei dem der eine oder die mehreren Steuerstrahlen (50) zentral von dem Läufer (12, 109) positioniert werden, vor dem Schritt der Einspritzung.

9. Verfahren nach Anspruch 7, bei dem während des Schritts des Einspritzens des einen oder der mehreren Steuerstrahlen (50) von Hochgeschwindigkeitsflüssigkeit, der eine oder die mehreren Steuerstrahlen (50) in einer Richtung eingespritzt werden, die aus der Gruppe ausgewählt wird, die besteht aus: entlang einer Achse (26) der Turbine (10, 110), parallel zu der Turbinenachse (26), auf einen Fokuspunkt benachbart zu dem oberen Abschnitt (24, 140) des Saugrohrs (22, 114) konvergierend, die auf der Turbinenachse (26) liegt, und auf einen Fokuspunkt benachbart zu dem oberen Abschnitt (24, 140) des Saugrohrs (22, 114) konvergierend, der auf einer parallelen Achse benachbart zu der Turbinenachse (26) liegt.

10. Verfahren nach Anspruch 7, bei dem der Schritt des Positionierens das Positionieren des Steuerstrahls oder Strahlen (50) von Hochgeschwindigkeitsflüssigkeit versetzt gegenüber einer Turbinenachse (26) umfasst.

## Revendications

1. Turbine hydraulique (10, 110) comprenant :
un passage (40, 115) permettant à un liquide de passer à travers la turbine (10, 110) ;
un tube d'aspiration (22, 114) définissant une partie du passage (40, 115) à travers lequel le liquide s'écoule normalement dans un chemin d'écoulement tourbillonnaire dans des conditions optimales de fonctionnement de turbine ;
une roue rotative montée en amont du tube d'aspiration (22, 114) et tournant autour d'un axe central (26) passant à travers la roue (12, 109) et s'étendant dans le tube d'aspiration (22, 114) ; et
au moins un dispositif de tête de buse (52, 128) positionné par rapport à l'axe central (26) de la roue (12, 109) et de manière adjacente à une partie supérieure (24, 140) du tube d'aspiration (22, 114), dans lequel l'au moins un dispositif de tête de buse (52, 128) présente au moins une buse (54, 130) pour injecter un jet de commande correspondant (50) d'un liquide à grande vitesse axialement en aval de la roue (12, 109) et dans le liquide s'écoulant dans la partie supérieure (24, 140) du tube d'aspiration (22, 114) pendant un fonctionnement de turbine en charge partielle, de manière à atténuer la rupture du chemin d'écoulement tourbillonnaire,
où la roue (12, 109) a une partie de couronne (14, 120), et la partie de couronne (12, 140) loge l'au moins un dispositif de tête de buse (52, 128),
**caractérisé en ce que**
la roue (12, 109) comprend un système de génération et de commande de jet situé dans l'une parmi la partie de couronne (14, 120) et une partie d'arbre (28) pour la roue (12, 109).

2. Turbine hydraulique (10, 110) de la revendication 1, dans laquelle l'au moins une buse (54, 130) place le jet de commande correspondant (50) du liquide à grande vitesse dans une position le long d'un axe central (26) de la turbine (10, 110) et décalée par rapport à l'axe central de turbine (26).

3. Turbine hydraulique (10, 110) de la revendication 1, dans laquelle l'au moins un jet de commande (50) du liquide à grande vitesse est éjecté à partir de la buse (54, 130) axialement dans une partie centrale du chemin d'écoulement tourbillonnaire du liquide s'écoulant dans le tube d'aspiration (22, 114).

4. Turbine hydraulique (10, 110) de la revendication 1, dans laquelle l'au moins un dispositif de tête de buse (52, 128) comprend en outre au moins une soupape située en amont de l'au moins une buse (54, 130) pour commander la pression du liquide du jet de commande correspondant (50).

5. Turbine hydraulique (10, 110) de la revendication 1, dans lequel l'au moins une soupape est apte à commuter le jet de commande correspondant (50) entre des états de marche et d'arrêt.

6. Turbine hydraulique (10, 110) de la revendication 1, où elle comprend en outre un ou plusieurs capteur(s) de pression (142) dans le tube d'aspiration (22, 114) pour mesurer la pression de liquide dans la partie supérieure (24, 140) du tube d'aspiration (22, 114) et relayer ces mesures à un dispositif de commande active qui, à son tour, commande le mouvement du dispositif de tête de buse (52, 128) afin de régler la vitesse du jet de commande (50) du liquide à grande vitesse.

7. Procédé de commande de fonctionnement en charge partielle d'une turbine hydraulique (10, 110) dans des conditions de charge partielle ayant une roue (12, 109), un tube d'aspiration (22, 114) situé en aval de la roue (12, 109) et un passage de liquide (40, 115) s'étendant à travers la roue (12, 109) et le tube d'aspiration (22, 114), le procédé comprenant l'étape d'injection d'un ou de plusieurs jet(s) de commande (50) du liquide à grande vitesse à partir d'une partie de couronne (12, 140) de la roue (12, 109) axialement par rapport à la turbine (10, 110), en aval de la roue de turbine (12, 109) et dans le liquide s'écoulant dans une partie supérieure (24, 140) du tube d'aspiration (22, 114) pendant un fonctionnement de turbine en charge partielle, de manière à atténuer la rupture du chemin d'écoulement tourbillonnaire.

8. Procédé de la revendication 7, comprenant l'étape qui consiste à placer le ou les plusieurs jet(s) de commande (50) au centre de la roue (12, 109) avant l'étape d'injection.

9. Procédé de la revendication 7, dans lequel pendant l'étape d'injection du ou des plusieurs jet(s) de commande (50) du liquide à grande vitesse, le ou les plusieurs jet(s) de commande (50) est/sont injecté(s) dans une direction choisie dans le groupe constitué de le long d'un axe (26) de la turbine (10, 110), parallèle à l'axe de turbine (26), convergeant sur un point focal adjacent à la partie supérieure (24, 140) du tube d'aspiration (22, 114) se trouvant sur l'axe de turbine (26), et convergeant sur un point focal adjacent à la partie supérieure (24, 140) du tube d'aspiration (22, 114) se trouvant sur un axe parallèle adjacent à l'axe de turbine (26).

10. Procédé de la revendication 7 dans lequel l'étape qui consiste à placer comprend le fait de placer le ou les jet(s) de commande (50) du liquide à grande vitesse de manière décalée par rapport à un axe de turbine (26).
